# EUROPEAN PATENT APPLICATION

(11) **EP 4 759 681 A1**
(43) Date of publication of application: **17.06.2026**
(21) Application number: 24219986.7
(22) Date of filing: 13.12.2024
(51) Int. Cl.: B62D 25/08, B62D 29/00

(54) **REAR PART STRUCTURE FOR A VEHICLE BODY**

(71) Applicant: Volvo Car Corporation, 405 31 Göteborg (SE)
(72) Inventor: CLARK, Austen, 40531 Göteborg (SE); PETTERSON, Lars, 40531 Göteborg (SE); LEJVELL, Peter, 40531 Göteborg (SE)
(74) Representative: Kransell & Wennborg KB

(57) **Abstract**

The disclosure relates to a rear part structure (10) for a vehicle body, wherein the rear part structure (10) comprises a base portion (20) and two wheelhouse portions (30) for partially housing a wheel therein, the base portion (20) extending between the two wheelhouse portions (30), wherein at least one of the wheelhouse portions (30) comprises one or more support members (40) for supporting a floor support structure (60) for supporting the luggage compartment floor (70) thereon, and wherein the wheelhouse portions (30), the base portion (20) and the one or more support members (40) are integrally formed with one another.

## Description

### TECHNICAL FIELD

The present disclosure relates to a rear part structure for a vehicle body and a rear part assembly.

### BACKGROUND ART

Vehicle bodies can comprise several different structures, which may be attached to one another. One of these structures is the rear part structure, which is generally located in the rear end of a vehicle. Typically, the rear part structure is being inter alia used for a trunk of the vehicle, where the rear part structure supports a luggage compartment floor inside the trunk. Luggage or other loads can be placed on the luggage compartment floor inside the trunk and is consequently supported by the rear part structure. The rear part structure however can have many more parts attached thereto, such as, for example, shock absorbers or generally a rear vehicle suspension, batteries, and so on.

The luggage compartment floor or, in other words, load compartment floor, has many different requirements and one of these is to be able to handle varying loads at different positions. This requires that the rear part structure in turn can cope with this and give the luggage compartment floor the support it needs.

### SUMMARY

The problem is at least partially solved or alleviated by the subject matter of the independent claims of the present disclosure, wherein further examples are incorporated in the dependent claims.

According to a first aspect, there is provided a rear part structure for a vehicle body, wherein the rear part structure comprises a base portion and two wheelhouse portions for partially housing a wheel therein, the base portion extending between the two wheelhouse portions, wherein at least one of the wheelhouse portions comprises one or more support members for supporting a floor support structure for supporting the luggage compartment floor thereon, and wherein the wheelhouse portions, the base portion and the one or more support members are integrally formed with one another.

The rear part structure may in particular be part of a trunk or generally a compartment of the vehicle or, in other words, form at least partially a trunk or compartment of the vehicle, in particular a support structure for the trunk such that luggage or other loads can be supported and consequently transported in the rear of the vehicle. The vehicle body may in particular be a car body, more particularly a passenger car body. The vehicle body may comprise one or more further structures in addition to the rear part structure, e.g., a front part structure and/or a middle part structure, to which the rear part structure may be attachable to form the vehicle body.

The rear part structure with its wheelhouse portions, the base portion and the one or more support members is integrally formed. In other words, the rear part structure with its portions and members is designed as a one-piece or monolithic structure. Hence, the rear part structure may be made from one single material, specifically a metal, e.g., aluminum or an aluminum alloy. Specifically, the rear part structure may be a casted part, e.g., an aluminum casting. The aluminum casting comprises aluminum. The aluminum casting may be made entirely from aluminum or can comprise aluminum, e.g., predominantly aluminum, and other materials, specifically metals.

The wheelhouse portions may be located opposite of one another and be connected with one another by the base portion extending in between these. The wheelhouse portions can be configured to at least partially house or surround the wheels of the vehicle therein. The wheelhouse portions may generally comprise a convex or bulge shape, which may be extending with its convex or bulge shape towards the base portion. Also, the wheelhouse portions may generally have an at least partially round or circular circumference or perimeter. Thereby, the wheels of the vehicle can be at least partially received within a space formed by the convex or bulge shape and within the at least partially round or circular perimeter of the wheelhouse portions.

One or both of the wheelhouse portions can comprise one or more (e.g., two) support members for supporting the floor support structure. Specifically, each one of the two wheelhouse portions may comprise two support members. The floor support structure is a structure that is separate from the rear part structure. This means that the floor support structure is not integrally formed with the rear part structure. The floor support structure may comprise or be made from any material such as metal, e.g., aluminum. Similarly, the luggage compartment floor can be a separate part separate from the rear part structure and the floor support structure. The luggage compartment floor can be designed as a substantially flat floor for the trunk. The luggage compartment floor can support luggage or any other load thereon, which the user of the vehicle puts into the trunk of the vehicle. The luggage compartment floor may be alternatively referred to as a load compartment floor. Compartment generally refers to the compartment of the trunk of the vehicle. The luggage compartment floor may be the bottom floor of that compartment.

Advantageously, having the one or more support members on one or both of the floor support structures enables to support the floor support structure, which in turn supports the luggage compartment floor, in a stable, lightweight and inexpensive way. Thereby, the luggage compartment floor is enabled to handle varying loads at different positions. Specifically, the already existing wheelhouse portions are utilized to comprise the one or more support members, which support the floor support structure. Advantageously, these support members are integrally formed with the wheelhouse portions such that no separate parts need to be attached to the rear part structure to support the floor support structure. This means that extra parts can be avoided, which results in fewer total parts, less weight, less mixed material, joining and extra labor when manufacturing the vehicle.

In an example, the at least one wheelhouse portion may comprise a shock absorber segment for receiving a shock absorber. The one or more support members may be arranged at the shock absorber segment. In particular, in the case of two support members, each one of the support members may be arranged at opposite sides of the shock absorber segment. Thereby, the shock absorber segment is utilized to include the one or more support members. Advantageously, the floor support structure can be accordingly support on the rear part structure at the shock absorber segment, which is relatively stiff, and in turn gives good support to the luggage compartment floor.

In an example, the one or more support members may be arranged at one or more reinforcement members of the shock absorber segment. The one or more reinforcement members may be arranged adjacent to a shock absorber member of the shock absorber segment. The shock absorber member may be comprising a shock absorber opening for receiving the shock absorber. Generally, the shock absorber member may have a convex or bulged shape. The convex or bulge shape of the shock absorber member may be extending towards the base portion. Thereby, the shock absorber can be received within the space formed by the convex or bulge shape. The shock absorber opening may be a hole at a top side of the shock absorber segment. The reinforcement members generally structurally reinforce the shock absorber segment. Providing the one or more support members at the reinforcement members thereby provides for a particularly stable support of the floor support structure and consequently luggage compartment floor on the rear part structure.

In an example, the rear part structure may comprise two support members. Each one may be arranged at one of two reinforcement members. The shock absorber member may be arranged in between the two reinforcement members. Accordingly, one support member may be provided at each one of two opposite sides of the shock absorber member having a reinforcement member such that the support and load carrying capabilities for the luggage compartment floor are even further enhanced.

In an example, the one or more reinforcement members may be convexly shaped towards the base portion. This means that the reinforcement members generally have a convex shape, which convexly extends towards the base portion. In other words, the reinforcement members have a concave shape, which concavely extends towards its wheelhouse portion. Specifically, the reinforcement members may have a bulged shape. Generally, the convex or bulged shape can form a space or pocket that is surrounded by the material of the reinforcement member. Advantageously, the convex or bulged shape with the pocket formed thereby structurally reinforces or strengthens the wheelhouse portion similar to a rib or other reinforcement structures but advantageously without adding further material and weight like a rib or other reinforcement structures would. Specifically, a top mount area of the shock absorber segment is typically a crucial area in the wheelhouse portion as a lot of forces are entering the rear part structure through this interface. To increase the stiffness in an efficient way, the reinforcement members forming the pockets can implemented. In particular, the reinforcement members may be arranged in a bend line between the wheelhouse portions and the base portion. The pockets in combination with optional ribs can give a continuous load path from the top mount attachment points or generally the shock absorber segments to the base portion or front subframe attachments thereof. Accordingly, the reinforcement members may herein in particular be referred to as load carrying pockets. Generally, the load carrying pockets may have load carrying paths along their lines of connection to their wheelhouse portion. In particular, the one or more reinforcement members, specifically the load carrying pockets, may comprise two or three walls. Specifically, the reinforcement members may be shaped as three walled beams on the wheelhouse portions. One side of these beams may be open, and the pocket or space may be formed in between the walls of the beams. Generally, the reinforcement members may be tapered in cross section along their extension in height from the base portion along the wheelhouse portion. Specifically, the reinforcement members may be having a greater cross section at or adjacent to the wheelhouse portion, from which they may extend in a tapered manner in height along the wheelhouse portion.

In an example, the at least one support member comprises a support section with a support surface for supporting the floor support structure. The support surface may generally extend horizontally such that the floor support structure can be placed and support thereon. In particular, each one of the support member may comprise a support section with a support surface. All support surfaces may substantially be parallel to one another. Thereby, it is possible to place the floor support structure and support it on the support members in a level and stable manner.

In an example, the support surface may be a round surface. Specifically, all support surfaces may be round surfaces. The floor support structure may comprise a counter-surface, that is placed on the round support surface. The counter-surface may however not be round but for example rectangular. Thereby, it can be ensured that the support surface is in full contact with the floor support structure to provide good support and stability.

In an example, the at least one support member may comprise a reinforcement rib extending between the support section and the base portion. The support member(s) may thereby be structurally reinforced to better withstand high loads or varying loads from the luggage compartment floor.

In an example, the at least one support member may comprise a convex body section. The support section may be extending above the convex body section. Accordingly, the support members may also have a convex or bulged body section, which may be extending in a convex or bulged manner from the wheelhouse portion to the base portion. Thereby, the support member itself is structurally strong to withstand high loads from the luggage compartment floor. For this purpose, the support section may be extending or arranged with its support surface above or on top of the convex body section. The convex body section may accordingly act as a load path and transfer the load from the top section along its body section towards the base portion or generally along the wheelhouse portion.

In an example, the support surface may be further configured as a push-out surface to push the rear part structure out of a die after casting the rear part structure. The push-out surface may in particular be round. Also, the push-out surface may be substantially extending in parallel to the base portion or generally horizontal. Accordingly, the support surface may be used in this orientation to push out the rear part structure out of a die when casting the rear part structure. One or more, specifically multiple, push-out surfaces may be provided on the base portion and/or the wheelhouse portion to evenly push out the rear part structure of the die.

In an example, the at least one wheelhouse portion may comprise one or more attachment means for attachment of the floor support structure. Accordingly, the floor support structure may not only be rested or support on the support members, but additionally be attached to the wheelhouse portion using the attachment means. For example, the attachment means may be openings or holes with or without threads for securing the floor support structure thereto, e.g., by using bolts or screws. This further strengthens the load carrying capabilities of the luggage compartment floor and ensures that the floor support structure does not move under varying load.

According to a second aspect, there is provided a rear part assembly comprising the rear part structure of the first aspect and two support floor structures supported on one or more support members of opposite wheelhouse portions of the rear part structure and attached to one or more attachment means of the opposite wheelhouse portions.

In an example, the rear part assembly may be further comprising a luggage compartment floor supported on the two floor support structures.

In an example, each one of the floor support structures may be configured as a rail with a support surface extending along a length of the rail for supporting the luggage compartment floor at opposite sides of the luggage compartment floor adjacent to the wheelhouse portions.

According to a third aspect, there is provided a vehicle body comprising the rear part assembly of the second aspect.

According to a fourth aspect, there is provided a vehicle comprising the vehicle body of the third aspect of the rear part assembly of the second aspect.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective view on a rear part structure with a floor support structure;
- Figure 2: shows a perspective view on a portion of the rear part structure of Fig. 1 without the floor support structure;
- Figure 3: shows a detailed view on a shock absorber segment, reinforcement members and support members of the portion of the rear part structure of Fig. 2; and
- Figure 4: shows a cross sectional view on a portion of a rear part assembly comprising the rear part structure and floor support structure of Fig. 1 and a luggage compartment floor.

### DETAILED DESCRIPTION

The Figures are merely schematic representations and serve only to illustrate examples of the disclosure. Identical or equivalent elements are in principle provided with the same reference signs.

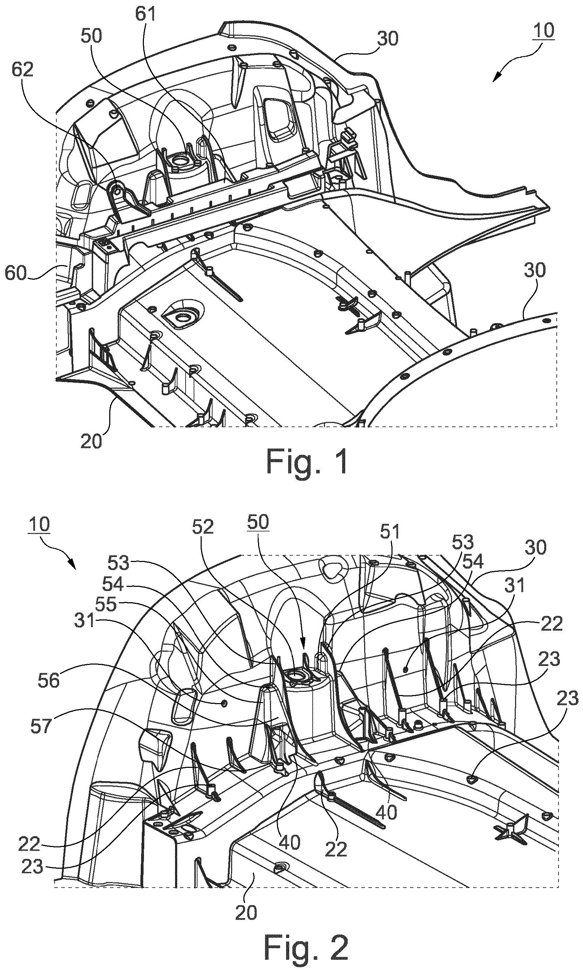

Fig. 1 shows a perspective view on a rear part structure 10 for a vehicle body. The rear part structure 10 comprises a base portion 20 and two wheelhouse portions 30, which are located opposite of one another and are arranged for partially housing a wheel therein. The base portion 20 extends in between the two wheelhouse portions 30.

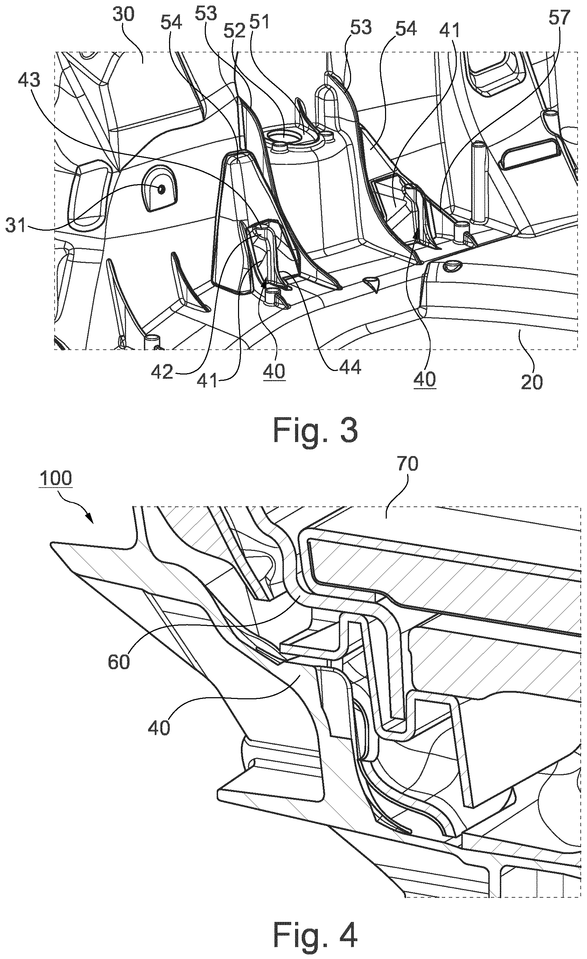

Figs. 2 and 3 show the rear part structure 10 in close views on one of the wheelhouse portions 30 and without a floor support structure 60 as shown in Fig. 1. The wheelhouse portion 30 opposite of the one shown in Figs. 2 and 3 may be designed similarly or exactly as the one shown in Figs. 2 and 3 and as explained herein.

As seen in Figs. 2 and 3, the wheelhouse portion 30 comprises two support members 40 for supporting the floor support structure 60 seen in Fig. 1 thereon, which in turn is used for supporting a luggage compartment floor 70 (see Fig. 4) thereon. The support members 40 are shown herein exemplary to extend in height along the wheelhouse portion 30 and being arranged on the base portion 20.

In this example, the wheelhouse portions 30, the base portion 20 and the support members 40 are integrally formed with one another by an aluminum die casting of the rear part structure 10.

The wheelhouse portion 30 comprises a shock absorber segment 50 for receiving a shock absorber (not shown). The support members 40 are arranged at the shock absorber segment 50. To be more precise, in this example, each one of the support members 40 is arranged at one of two reinforcement members 54 of the shock absorber segment 50, where each one of the reinforcement members 54 is arranged adjacent to a shock absorber member 51 of the shock absorber segment 50. The shock absorber member 51 comprises a shock absorber opening 52 at its top side for receiving the shock absorber.

Reinforcement ribs 53 are arranged between each one of the reinforcement members 54 and the shock absorber member 51. Specifically, the reinforcement ribs 53 may be forming one wall 53 of three walls of the reinforcement members 54, which may generally have a three-wall shaped structure. The other two walls are referenced with reference signs 55 and 56. Specifically, the reinforcement members 54 may be convexly shaped, the convex shape extending from the wheelhouse portion 30 in the direction of the base portion 20. Specifically, a space or pocket may be formed internally between the walls 53 55, 56 of each reinforcement member 54, which thereby acts as a pocket load carrying structure.

Generally, the reinforcement members 54 may be extending from the base portion 20 in height along the wheelhouse portion 30 and they may be tapered along their height. Specifically, the reinforcement members 54 may be extending along or at an interface or bend between the wheelhouse portion 30 and the base portion 20. Similarly, the support members 40 may be extending along or at an interface or bend between the wheelhouse portion 30 and the base portion 20. Generally, the wheelhouse portion 30 may be vertically extending in height from the base portion 20, whereas the base portion 20 may have a horizontal extension.

As further seen in Fig. 2, further reinforcement ribs 57 may be provided at or on the wall 55 of the reinforcement members 54. Additionally, reinforcement ribs 22 may generally be provided on the base portion 20 and/or the wheelhouse portion 30 as referenced in Fig. 2.

As seen in Fig. 3, each one of the support members 40 may be arranged at one of the reinforcement members 54, specifically in front thereof with respect to the direction towards the base portion 20. More specifically, each one of the support members 40 may be arranged at the wall 56 of the reinforcement members 54. As shown herein, the wall 56 is the middle wall 56 in between the other wall 55 and the reinforcement rib 53 or, in other words, the thereby formed wall 53.

As seen in Fig. 3, the support members 40 have a convex shape. Specifically, the support members 40 may comprise a convex body section 41 that is formed as a convex bulge on the reinforcement members 54. The support members 40 further comprise a support section 42 atop the convex body section 41, which comprises a round support surface 43 for supporting the floor support structure 60. As seen in Figs. 1 and 4, the floor support structure 60 is resting or, in other words, supported on top of the support surfaces 43 of the support members 40. Additionally, in this example, the support members 40 comprise reinforcement ribs 44 extending between the support section 42 and the base portion 20.

To attach the floor support structure 60 to the wheelhouse portion 30, the wheelhouse portion 30 of this example comprises attachment means 31 in exemplary form of openings or holes with or without threads. The floor support structure 60 correspondingly comprises sections with attachment means 62, which may also be openings or holes with or without threads. Bolts or screws may be used to attach the floor support structure 60 to the wheelhouse portion 30 such that the floor support structure 60 rests on the support surfaces 43.

Advantageously, the round support surfaces 43 are designed similar or identical to push-out surfaces 23 on the base portion 20 to push the rear part structure 10 out of a die after casting the rear part structure 10.

The floor support structure 60 also comprises a support surface 61, which however may be rectangular in shape as shown in Fig. 1. As shown in Fig. 4, a luggage compartment floor 70 may be supported on the support surface 61 of the floor support structure 60, which itself is supported on the support members 40, to form a rear part assembly 100.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: rear part structure
- 20: base portion
- 22: reinforcement rib
- 23: push-out surface
- 30: wheelhouse portion
- 31: attachment means
- 40: support member
- 41: convex body section
- 42: support section
- 43: support surface
- 44: reinforcement rib
- 50: shock absorber segment
- 51: shock absorber member
- 52: shock absorber opening
- 53: reinforcement rib, wall
- 54: reinforcement member
- 55, 56: walls
- 57: further reinforcement rib
- 60: floor support structure
- 61: support surface
- 62: attachment means
- 70: luggage compartment floor
- 100: rear part assembly

## Claims

1. A rear part structure (10) for a vehicle body, wherein the rear part structure (10) comprises a base portion (20) and two wheelhouse portions (30) for partially housing a wheel therein, the base portion (20) extending between the two wheelhouse portions (30), wherein at least one of the wheelhouse portions (30) comprises one or more support members (40) for supporting a floor support structure (60) for supporting the luggage compartment floor (70) thereon, and wherein the wheelhouse portions (30), the base portion (20) and the one or more support members (40) are integrally formed with one another.

2. The rear part structure (10) of claim 1, wherein the at least one wheelhouse portion (30) comprises a shock absorber segment (50) for receiving a shock absorber, and wherein the one or more support members (40) are arranged at the shock absorber segment (50).

3. The rear part structure (10) of claim 2, wherein the one or more support members (40) are arranged at one or more reinforcement members (54) of the shock absorber segment (50), the one or more reinforcement members (54) being arranged adjacent to a shock absorber member (51) of the shock absorber segment (50), the shock absorber member (51) comprising a shock absorber opening (52) for receiving the shock absorber.

4. The rear part structure (10) of claim 3, wherein the rear part structure (10) comprises two support members (40), each one being arranged at one of two reinforcement members (54), the shock absorber member (51) being arranged in between the two reinforcement members (54).

5. The rear part structure (10) of claim 3 or 4, wherein the one or more reinforcement members (54) are convexly shaped towards the base portion (20).

6. The rear part structure (10) of any one of the previous claims, wherein the at least one support member (40) comprises a support section (42) with a support surface (43) for supporting the floor support structure (60).

7. The rear part structure (10) of claim 6, wherein the support surface (43) is a round surface.

8. The rear part structure (10) of claim 6 or 7, wherein the at least one support member (40) comprises a reinforcement rib (44) extending between the support section (42) and the base portion (20).

9. The rear part structure (10) of any one of claims 6 to 8, wherein the at least one support member (40) comprises a convex body section (41), the support section (42) extending above the convex body section (41).

10. The rear part structure (10) of any one of claims 6 to 9, wherein the support surface (43) is further configured as a push-out surface to push the rear part structure (10) out of a die after casting the rear part structure (10).

11. The rear part structure (10) of any one of the previous claims, wherein the at least one wheelhouse portion (30) comprises one or more attachment means (31) for attachment of the floor support structure (60).

12. The rear part structure (10) of any one of the previous claims, wherein the rear part structure (10) is an aluminum casting.

13. A rear part assembly (100) comprising the rear part structure (10) of any one of the previous claims and two support floor structures (60) supported on one or more support members (40) of opposite wheelhouse portions (30) of the rear part structure (10) and attached to one or more attachment means (31) of the opposite wheelhouse portions (30).

14. The rear part assembly (100) of claim 13, further comprising a luggage compartment floor (70) supported on the two floor support structures (60).

15. The rear part assembly (100) of claim 13 or 14, wherein each one of the floor support structures (60) is configured as a rail with a support surface (61) extending along a length of the rail for supporting the luggage compartment floor (70) at opposite sides of the luggage compartment floor (70) adjacent to the wheelhouse portions (30).
